# EUROPEAN PATENT SPECIFICATION

(11) **EP 0 540 030 B1**
(45) Date of publication and mention of the grant of the patent: **23.09.1998**
(21) Application number: 92118625.0
(22) Date of filing: 30.10.1992
(51) Int. Cl.: H01R 4/64, H01R 4/26, F16B 37/06, H01R 4/06, H01R 4/30

(54) **Electrical grounding stud**
Erdungsbolzen
Vis de mise à la terre

(30) Priority: 31.10.1991 US 786243
(43) Date of publication of application: 05.05.1993
(73) Proprietor: PROFIL-Verbindungstechnik GmbH & Co. KG, 61381 Friedrichsdorf (DE)
(72) Inventor: Ladouceur, Harold A., Livonia, Michigan 48154 (US); Müller, Rudolf R.M., W-6000 Frankfurt-56 (DE)
(74) Representative: Manitz, Finsterwald & Partner

(56) References cited:
- EP-A- 0 166 929
- DE-A- 3 133 638
- DE-U- 8 225 078
- FR-E- 1 618
- GB-A- 2 068 493
- US-A- 3 922 050

## Description

The present invention relates to an electrical grounding connector assembly for attachment to an electrically conductive panel and to a method of attaching an electrical grounding connector assembly to an electrically conductive panel.

U.S. Patent Nos. 4,193,333 and 3,871,264 disclose means of attaching a stud-like fastener, wherein the stud includes an annular end portion which penetrates a plate or structural steel member, which may be deformed radially around a plug pierced from the panel.

U.S. Patent Nos. 1,976,019; 2,456,118; 2,521,505; 3,436,803; 3,754,731; 4,039,099; and 4,092 773 disclose various riveting techniques, wherein the fastener includes an annular end portion which may be press-fitted through an opening in a panel. The annular end portion is then riveted or radially outwardly deformed by a die member having an annular semi-toroidal die cavity and may include a projecting central die portion which is received in the annular riveting end of the fastener.

Although the above-referenced patents do disclose self-riveting male and female fasteners, and methods of installing same, they do not disclose a riveting stud type fastener which is suited for making a reliable electrical grounding connection to a metal panel or the like. For example, U.S. Patent Nos. 4,193,333 and 3,871,264 which disclose methods of attaching stud fasteners to a panel, primarily teach a methodology for providing superior mechanical interlock between the stud fastener and the panel and do not address the issue of the electrical integrity of the connection. It is well known that a fastener can provide excellent mechanical bonding to a panel while providing unacceptable electrical conductivity to the same panel. For example, various coatings could be present on an electrically conductive panel which, although not interfering with the mechanical interlock between the stud fastener and the panel, may partially, or entirely impede the flow of electrical current through the fastener and panel interface.

Accordingly, it is the primary object of this invention to provide a stud type fastener which is adapted to be attached to an electrically conductive panel and a method of attaching the fastener to the panel wherein the fastener provides both superior mechanical connection to the panel while also providing excellent electrical conductivity across the fastener/panel interface and between the fastener and the conductive lug which is attached to the fastener in use. Further, the fastener and method herein disclosed are particularly suited for mass production applications, particularly automotive applications utilizing automatic presses. The fastener of the present invention can be used in a panel having a pre-pierced opening, but is not limited to pre-pierced applications inasmuch as the present fastener is adapted to pierce the panel during the installation process.

To satisfy this object there is provided an electrical grounding connector assembly for attachment to an electrically conductive panel, said electrical grounding connector assembly of the type having a grounding stud connector having a body portion disposed between, and integrally joining, a stud portion and a riveting portion, wherein said riveting portion may be a piercing and riveting portion and wherein said body portion includes a flange extending generally radially from said body portion, said flange having a panel engaging surface and a lug engaging surface, said electrical grounding connector assembly comprising:

barbed means, disposed on at least one of said riveting portion and said panel engaging surface of said flange, for conducting electrical current between said electrical grounding connector assembly and said conductive panel when said electrical grounding connector assembly is joined to said electrically conductive panel; and
a displaceable cap or a displaceable female nut member adapted to cooperatively engage and substantially cover said stud portion of said grounding stud connector and also adapted to cover said lug engaging surface of said flange, thereby protecting said stud portion and said lug engaging surface of said flange from contaminants.

Thus in accordance with the present invention the stud connector and the cap or female nut member are fitted to the panel as an assembly.

For the sake of completeness reference should also be made to two further prior art references (GB-A-2,068,493 and DE-U-8,225,078).

GB-A-2,068,493 describes a stud fastener having a body portion, disposed between, and integrally joining, a stud portion and a riveting portion. The riveting portion is a riveting and piercing portion, and the body portion includes a flange portion extending generally radially from said body portion. The flange has a panel engaging surface. The stud fastener is however not adapted for use as an electrical grounding stud and is installed by pressure applied to the flange portion, e.g. in a pressing operator, by a punch while the panel is supported on a die button. The slug punched from the panel by the tubular riveting and piercing portion of the fastener is jammed into the inside of this portion enhancing the anchorage of the stud in the panel.

DE-U-8,225,078 describes a nut and bolt fastener adapted for securing a connecting lug to a panel. The nut and/or the bolt element have circularly extending cutting ring elements to cut through painted coatings on frame parts and establish a good electrical connection. The nut and bolt fasteners described in DE-U-8,225,078 are not riveting fasteners and are also not self piercing.

In a preferred embodiment of the electrical grounding connector assembly, the cap is made from a metal and includes a load bearing flange having first and second opposed load bearing surfaces. The first load bearing surface is adapted to engage the lug engaging surface of the flange portion of the grounding stud connector and the second load bearing surface is adapted to engage a plunger which is adapted to drive the grounding connector assembly into the electrically conductive panel. In an alternative embodiment, the metal cap or female nut member includes first and second load bearing, opposing ends, wherein the first load bearing end is adapted to engage the lug engaging surface of the flange portion of the grounding connector and the second load bearing end is adapted to engage a plunger for driving the connector assembly into the conductive panel.

The cap forms a female element including a body portion having an axial bore therein, the axial bore being adapted to engage the stud portion of the male fastener. The female element is adapted to cover the stud portion of the male fastener and also to cover the lug engaging surface of the flange thereby protecting the stud portion and the lug engaging surface of the flange from contaminants.

The present invention also contemplates a method of attaching an electrical grounding connector assembly to an electrically conductive panel in accordance with claim 22.

Preferred embodiments of the present teaching are set forth in the subordinate claims.

The connector and connector assembly of the present invention is particularly suited for transfer from a hopper or other source to an installation device. The connector and a connector assembly may be arrayed within the installation device by automatic means that stacks and aligns, the connectors readying them for installation.

It will be understood by those skilled in the art that the terms used herein to generally describe the connector (such as female and male connectors) are used only as short-hand labels and the actual geometry of the connectors may take on a multiplicity of forms. As used herein, "connector" or "fastener" refers not only to the function of the connector or fastener to attach one member to a panel, but also the means of attaching the fastener or connector to the panel.

Other advantages and meritorious features will be more fully understood from the following description of the preferred embodiments of the grounding connector, grounding connector assemblies and method of installing same, the appended claims and the drawings, in which:
Figure 1 is an isometric view of a first embodiment of an electrical grounding stud of the present invention,
Figure 2 is a top view of the electrical grounding stud of Figure 1 taken substantially along lines II-II of Figure 1,
Figure 3 is a partial cross sectional side view taken substantially along lines 10-10 of Figure 2,
Figure 4 is a partial cross sectional view of a typical installation apparatus used to install the first embodiment of the electrical grounding stud of the present invention into an electrically conductive panel;
Figure 5 is a cross sectional bottom view of the first embodiment of the electrical grounding stud of the present invention and the installation plunger of a typical installation apparatus taken substantially along lines V-V of Figure 4,
Figure 6 is a partial cross sectional view of the electrical grounding stud of the present invention installed in an electrically conductive panel,
Figure 7 is an isometric top view of the electrical grounding stud of the present invention installed in an electrically conductive panel,
Figure 8 is an isometric view of a second embodiment of the electrical grounding stud of the present invention,
Figure 9 is a partial cross sectional side view of the electrical grounding stud of the present invention shown in Figure 8,
Figure 10 is a bottom view of the second embodiment of the electrical grounding stud of the present invention,
Figure 11 is a bottom view of a third embodiment of an electrical grounding stud of the present invention,
Figure 12 is a view of a fourth embodiment of an electrical grounding stud of the present invention,
Figure 13 is a partial cross sectional side view of a fifth embodiment of an electrical grounding stud of the present invention shown assembled to a protective nut,
Figure 14 is a partial cross sectional side view of the electrical grounding stud of Figure 13 assembled to another protective nut, of the present invention,
Figure 15 is a partially sectioned side view of a further embodiment of an electrical grounding connector,
Figure 16 is a longitudinal section through the electrical grounding connector of Figure 15 after assembly with a panel member and before withdrawal of the press tool,
Figure 17 is a detail Y corresponding to the circled portion Y of Figure 15,
Figure 18 is a detail Z corresponding to the circled portion Z of Figure 15 and
Figure 19 is a plan view of the electrical grounding connector of Figure 15 as seen in the direction of the arrow XIX.

The electrical grounding connector and grounding connector assembly of the present invention is particularly adapted for permanent attachment to a panel or plate, particularly a metal sheet or the like, such as utilized in the automotive and appliance industries. The disclosed electrical grounding connector and assembly is particularly well suited for installation by way of conventional press apparatus typical of that utilized in the automotive industry. The method of the present invention is also well suited for application by way of a conventional press. In such applications, the press installs one or more connector assemblies with each stroke wherein the connector assemblies become a permanent part of the panel and are utilized to affix other members such as brackets or the like to the panel. Further, the electrical grounding connector of the present invention is particularly suited for attachment to relatively thin sheets or panels, such as utilized by the appliance industries. Accordingly, as used herein, "panel" refers to any plate, panel, or metal sheet having sufficiently high electrical conductivity to be considered an effective electrical conductor and a thickness sufficiently thin for practical application of the riveting portion of the grounding connector.

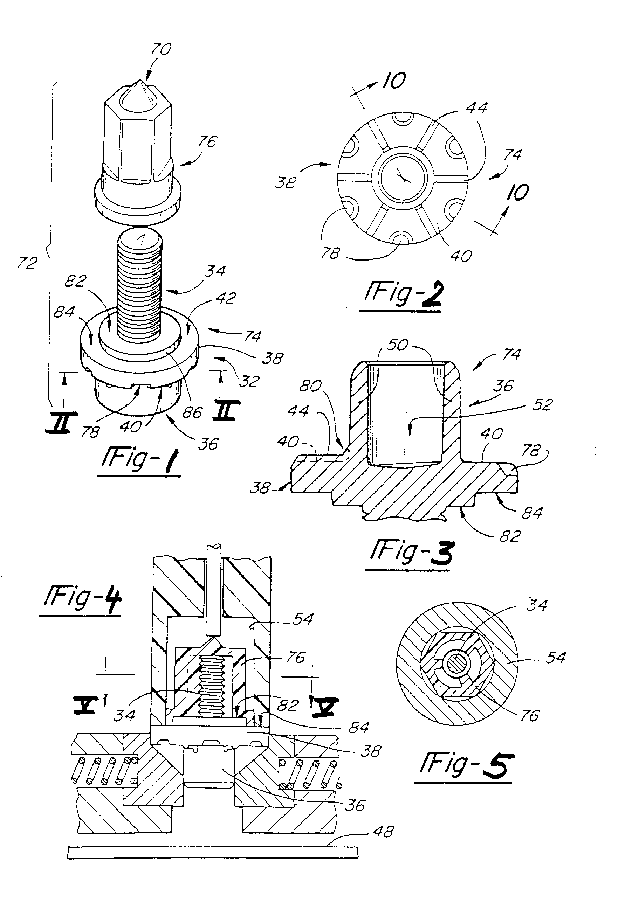

Now referring to Figures 1-3, a first embodiment of the grounding connector of the present invention includes an electrical grounding connector assembly 72. The assembly 72 includes an electrical grounding stud 74 and protective cap 76. The assembly 72 is adapted to be installed, as an assembly, into a panel in a single installation operation. This will be further described in reference to Figures 1-7.

Now referring to Figures 1-3, electrical grounding stud 74 includes body portion 32, stud portion 34, and riveting portion 36. Body portion 32 is disposed between, and integrally joins, stud portion 34 and riveting portion 36. Body portion 32 includes flange 38 which extends generally radially from body portion 32. Flange 38 includes panel engaging surface 40 and lug engaging surface 42. Panel engaging surface 40 of flange 38 includes barbed elements 44 and pockets 78. Barbed elements 44 generally rise above panel engaging surface 40 while pockets 74 generally reside below panel engaging surface 40. Barbed elements 44 provide, in conjunction with pockets 78, superior anti-rotation resistance upon fastening grounding stud 74 to a panel. The superior anti-rotation resistance is largely due to the fact that the combination of elevated barbs 44 and depressed pockets 78 accommodate under-hit and over-hit conditions which are typically associated with fastener installations techniques which use presses. As understood by those skilled in the art, it is impossible to control the precise stroke upon which a press platen will travel during the course of installing grounding stud 74 in panel 48. Because of this unpredictability, some grounding studs 74 will be forced into a mating panel deeper than preferred (this is commonly known as an over-hit condition) and alternatively, in some instances, grounding stud 74 will not be driven into the mating panel to the extent that it should be (this is commonly termed as an under-hit condition). Grounding stud 74 of the present invention is particularly well suited to accommodate under-hit and over-hit conditions in that in the event of an over-hit condition, panel metal is driven into pockets 78 thereby giving stud 74 excellent torque resistance while also providing panel penetration features thereby allowing stud 74 to function adequately as an electrical grounding stud. On the other hand, when ground stud 74 experiences an under-hit condition upon installation (while pockets 78 may experience little to no panel metal contact) raised barbed elements 44 will penetrate into the mating panel surface thereby providing torque resistance and an excellent conductivity interface.

First barbed elements 44 preferably extend across panel engaging surface 40 and integrally join annular wall 50 of riveting portion 36. When first barbed elements 44 are fashioned in such a manner, cutting edge 80 is formed at the intersection of panel engaging surface 40 and riveting portion 36 providing a cutting edge which scores the surface of the mating panel during installation of fastener 74 providing excellent electrical conductivity between stud 74 and the electrically conductive panel which stud 74 is fastened to.

Lug engaging surface 42 includes surface 82 which is proximate stud portion 34 and surface 84 which is distal stud portion 34. Surface 82 is raised relative to surface 84 thereby creating step surface 86.

Protective cap 76 is adapted to positively engage stud portion 34 and surface 82 of lug engaging surface 42. Cap 76 has only one open end (which accepts stud portion 34). End 70 is closed thereby preventing paint, coatings, and the like from contacting stud portion 34 or surface 82. As will be discussed in conjunction with Figures 4-7, cap 76 is fastened to stud portion 34 of grounding stud 74 prior to installing assembly 72 in an electrically conductive panel. By installing assembly 72 as a single unit into an electrically conductive panel, the panel can be painted, or otherwise coated before or after installing assembly 72, without adversely effecting the grounding characteristics of grounding stud 74. If assembly 72 is installed on an electrically conductive panel after the panel is painted or otherwise coated, barbed elements 44 and pockets 78 will act, as has already been described, to penetrate any coatings on panel 48 to provide an ample grounding path between stud 74 and panel 48. If assembly 72 is subjected to paint or other contaminants once it is installed in an electrically conductive panel, protective cap 76 will prevent stud portion 34 or surface 82 from being contacted by any contaminants. When it is appropriate to attach a grounding lug to stud portion 34, protective cap 76 is simply removed and discarded and a lug is placed around stud portion 34 (as has already been described) and secured thereto by a nut or other suitable means. In view of the above, it is easily understood, that the first embodiment of the grounding connector of the present invention is well suited for achieving good electrical conductivity between itself and a mating panel while also providing excellent torque resistance regardless of under-hit or over-hit installation conditions.

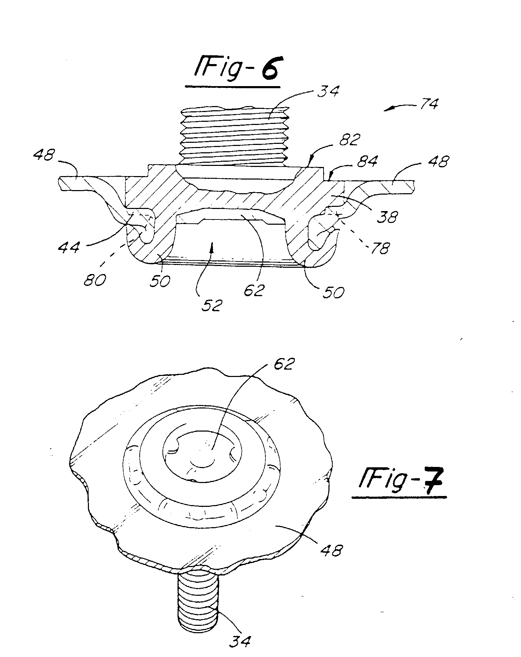

Now referring to Figures 4-7, in the preferred method of installing assembly 72, assembly 72 is placed adjacent panel 48 (see Figure 4) such that riveting portion 36 of electrical grounding stud 34 is proximate panel 48. Plunger 54 is attached to the platen of a press or the like which is adapted to develop sufficient force to pierce panel 48 with riveting portion 36 of electrical grounding stud 74. Surface 84 of flange 38 acts as a plunger engaging surface enabling the downward forces exerted by plunger 54 against electrical grounding stud 74 to be directly transferred to grounding stud 74 (and do not pass through cap 76). It would be impractical to transmit the downward force of plunger 54 through cap 76 inasmuch as the preferred materials for cap 76 are plastic and the like. Although plastic or the like is the preferred material (because protective cap 76 is typically discarded at the time an electrically conductive lug is placed on stud portion 34), any other inexpensive, readily removable, substitute may be used such as rubber, various coatings, and the like. As seen in Figure 6, cutting edge 80 forms an excellent electrical interface between electrical grounding stud 74 and electrically conductive panel 48 while the combination of barbed elements 44 and pockets 78 form excellent anti-rotation means accommodating both over-hit and under-hit conditions. Electrical grounding stud 74 is suited for use both in prepierced panel applications and non-prepierced panel application. When electrical grounding stud 74 is used in non-prepierced panel applications, slug 62, which is severed from panel 48 during installation, can either be discarded or permanently staked within socket 52.

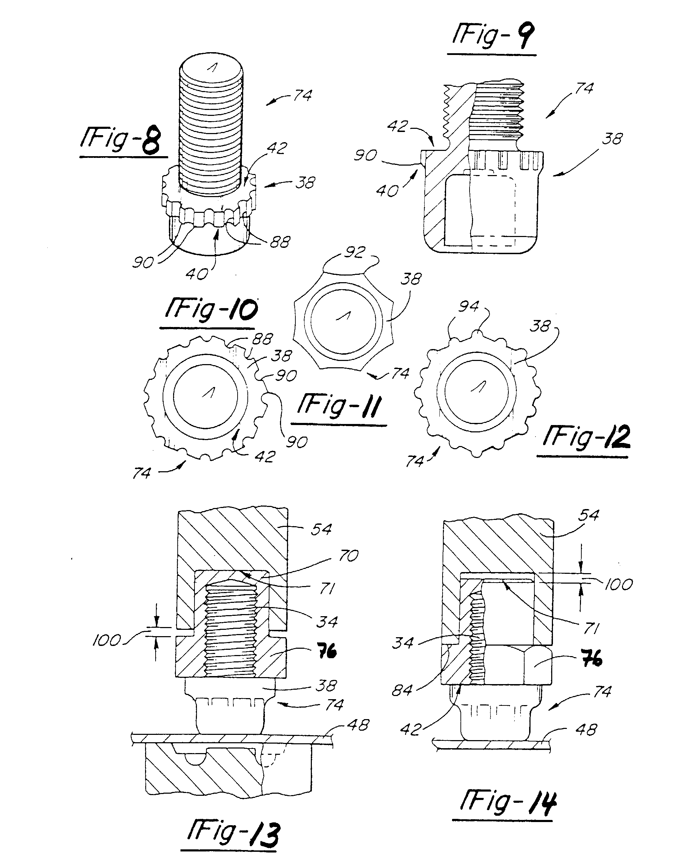

Now referring to Figures 8-12, although many different geometries may be used to accomplish superior electrical interface between electrical grounding stud 74 and an electrically conductive panel, the specific location and geometry of cutting surfaces disposed on electrical ground stud 74 are believed to be important. For example, in the alternative embodiments of electrical grounding stud 74 set out in Figures 8-10, flange 38 is generally polygonal (see Figure 17) having arcuate, coved splines 88 superimposed thereon. Splines 88 intersect panel engaging surface 40 and lug engaging surface 42 thereby creating vertices 90 which form excellent cutting geometries to penetrate panel 48 thereby creating excellent electrical conductivity from electrical grounding stud 74 to mating panel 48. Other embodiments of flange 38 include designing flange 38 with an outer surface resembling that of a hypocycloid preferably having eight cusps 92 (see Figure 11). In the embodiment of grounding stud 74 set out in Figure 11, cusps 92 function similarly to that of vertices 90.

Still, in an alternative embodiment, Figure 12 shows flange 38 being generally polygonal having a plurality of arcuate raised surfaces 94 superimposed thereon. It is fully contemplated that geometries other than those shown in Figures 2 and 8-12 are also suitable for providing excellent electrical conductivity between assemblies using electrical grounding stud 74 and mating panel 48.

Now referring to Figure 13, in a preferred embodiment, protective nut 76 also functions as a means for translating the downward force of plunger 54 to the electrical grounding stud during the installation process. As can be seen from Figure 13, unlike the embodiment of nut 76 set out in Figure 1, if nut 76 is comprised of metal or the like, it can be designed with sufficient strength to withstand the downward force exerted against it by plunger 54 during the installation process. By designing nut 76 from metal, or other similar materials, several advantages are gained. Firstly, the radius of flange 38 can be reduced (over that disclosed in conjunction with the embodiment of electrical grounding stud shown in Figures 1-7). This is possible because plunger engaging surface 84 is not needed and therefore can be eliminated. This, of course, results directly in a cost saving due to reduced materials and also results in a weight reduction per unit electrical grounding stud. As can be seen from Figure 13, plunger 54 acts directly against external surface 71 of closed end 70 of nut 76. The force is translated through nut 76 causing electrical grounding stud 74 to pierce through panel 48 in the manner which has already been discussed. In order to ensure positive engagement between plunger 54 and external surface 71, plunger 54 is designed having gap 100.

In an alternative approach, plunger 54 is adapted to bear upon engaging surface 84 of nut 76 thereby transferring a downward force against electrical grounding stud 74 through lug engaging surface 42. In order to ensure positive contact between plunger 54 and engaging surface 84, plunger 54 is designed having gap 100.

In addition to the reduction in weight and cost associated with eliminating plunger engaging surface 84 from flange 38, an additional benefit is realized when nut 76 is constructed from metal. This additional benefit arises because nut 76 can, in addition to providing the protective function which has already been discussed in conjunction with protective cap 76, be used as the means for securing an electrical grounding lug to lug engaging surface 42 of electrical grounding stud 74. For example, once electrical grounding stud 74 is fastened to electrically conductive panel 48, metal nut 76 is unthreaded, at least partially, (or otherwise removed) from stud portion 34 and an electrical grounding lug is placed against lug engaging surface 42 of electrical grounding stud 74. Then, metal nut 76 is drawn against the electrical lug such that a secure electrical contact is made between the grounding lug and lug engaging surface 42. This approach has the obvious advantage over constructing the nut from plastic in that the plastic nuts are simply disposed of after they provide their protective function and must be replaced by a metal nut to perform the function of securing a grounding lug to the electrical grounding stud. In a high production setting, the discarded plastic nuts must be collected and disposed of in an orderly fashion in order to eliminate potential safety hazards and other problems associated with improperly discarded nuts. The metal nut disclosed in Figures 13 and 14 eliminates this problem inasmuch as the metal nut services to both protect stud portion 34 from contaminants while also serving the utilitarian function of securing an electrical grounding lug against lug engaging surface 42 of electrical grounding stud 74.

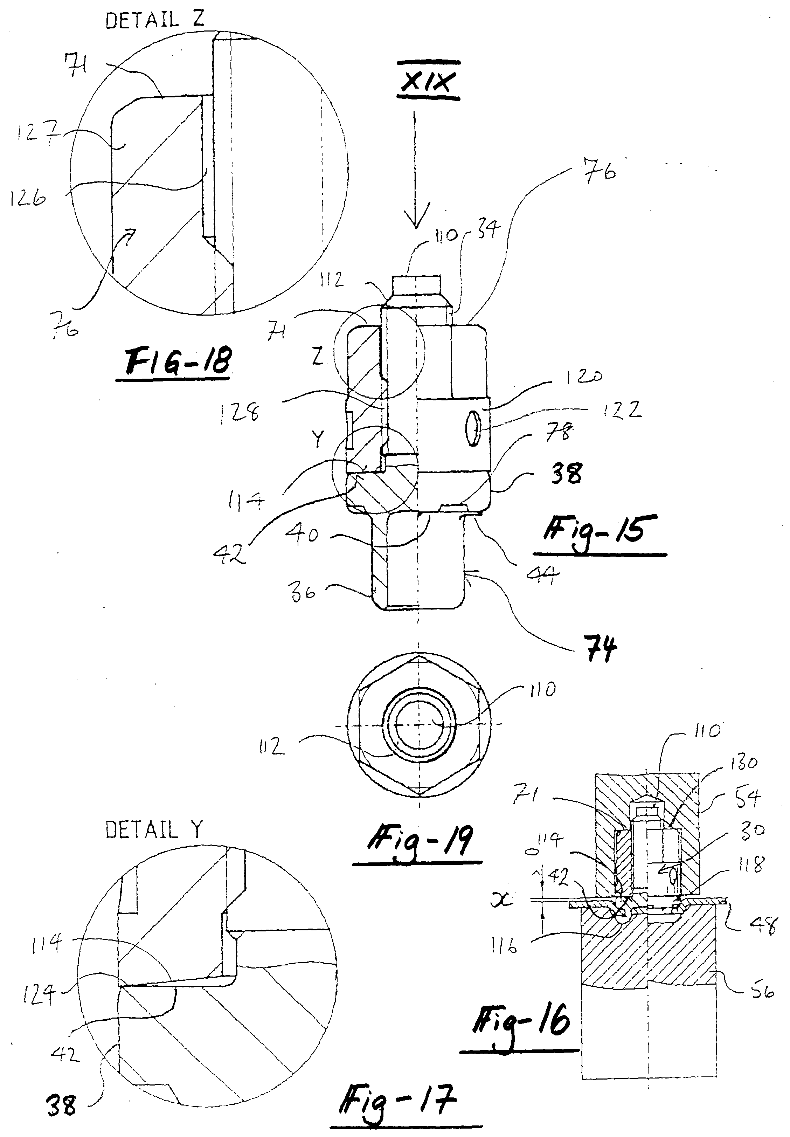

Figures 15 to 19 show further views of an alternative form of an electrical grounding connector which is a preferred embodiment and which is provided with a preferably metallic nut member 76 which is used not only to positively engage and protect the stud portion from paint, underseal or other such compounds but also to fit the piercing and riveting stud member 30 to a panel member 48 in a manner similar to that described above with reference to Figures 13 and 14, but with certain detail differences in the method as will be later described in more detail. In principle the grounding stud 74 of Figure 15 resembles closely the grounding stud of Figure 1 and it is provided with the same barbs 44 and pockets 78 at its panel engaging surface 40.

The flange 38 also has an end face 42 adjacent the stud portion 34 but in this embodiment the end face is a simple flat radial surface, i.e. it does not have the raised portion 82 of the stud of Figure 1. The other detailed difference of the stud member 74 of Figure 15 which is worthy of mention is the reduced diameter end portion 110 which merges via a conical surface 112 into the body of the stud portion. In the completed device this reduced diameter end portion 110 allows an electrical connection lug to be readily fitted over the end of the stud, and can also facilitate handling of the stud member and the assembly during manufacture.

The female nut member 76 is of a special design, arising in part from the method of fitting which will now be outlined before considering the detail of the female nut member.

As can be seen from Figures 15 and 16, and also partly from
Figure 19, the end portion 110 of the grounding stud 74 projects upwardly through the female nut member 76 and the assembly comprising the grounding stud and the nut member is fitted into a panel by means of a plunger 54. The plunger 54 has a working surface 130 which engages the annular end face 71 of the female nut member 76 and presses the opposite end face 114 thereof against the flange end face 42 to drive the piercing and riveting portion 36 of the grounding stud 74 through the panel 48 into the semitoroidal die cavity 116 of die member or die insert 56.

It will be noted that after the fitting of the grounded connector assembly to the panel 48 the lower face 118 of the plunger 54 is spaced from the surface of the panel by a distance x (Figure 16) which also corresponds to the distance between the end face 42 of the grounding stud 30 and the top surface of the panel. In this way the plunger 54 is prevented from contacting the top surface of the panel 48 itself and from damaging the same - even if the panel is pre-painted. Moreover, the surface 42 of the flange of the stud member stands proud of the top surface of the panel and ensures that after loosening or removal of the female nut member 76 the electrical connecting lug fitted under the nut and over the stud electrically contacts the grounding stud rather than the panel (where only a faulty contact might arise) and also does not damage any paint applied to the panel.

Several details of the female nut member are worthy of particular mention.

The grounding connector assembly shown here is in particular distinguished from the grounding connector assembly which have been previously illustrated and disclosed in that the screwed on female nut element 76 is open upwardly (as already mentioned), i.e. so that the shaft of the screw portion of the stud projects out of the screwed on nut element. In addition the nut element 76 is provided with a clamping portion 120 in the form, in this embodiment, of a generally cylindrical collar which has at least one and preferably a plurality of equally angularly disposed radial recesses 122 which have been mechanically deformed inwardly to grip slightly on the threaded portion of the stud. This has the particular advantage that the assembly can be put together at the time of manufacture so that the surface 114 contacts the surface 42 and so that this relative portion is not lost in subsequent transport and handling. There is also no danger of the nut becoming separated from the grounding stud and being lost, which would be inconvenient and could cause damage in an automatic handling system, or in the press.

Moreover, it will be noted from the detail Y of Figure 17 that the end face 42 of the flange 38 is essentially a radial surface perpendicular to the longitudinal axis of the grounding stud, whereas the end face 114 of the female nut member 76 confronting the end face 42 is a very shallow cone surface which converges radially inwardly and upwardly and thus results in an annular line contact between the surface 114 and the surface 42 at the position indicated by the reference numeral 124 in Figure 17. This contact at this position ensures that paint, underseal etc. is reliably kept away from the surface 42 so that it cannot impair electrical grounding at this position. That is to say a sealing occurs between the shoulder of the stud member and the circular ring surface of the nut due to the circular line contact between the shoulder edge of the stud member and the end surface of the nut member. Good seal is ensured by the high surface pressure caused by the tightening torque with which the two elements are screwed together and it is this that guarantees the paint seal contact.

The detail Z of Figure 18 shows the end face 71 of the nut member on which the working surface 130 of the plunger 54 acts during the piercing and riveting procedure. In addition Figure 18 shows the clearance 126 which takes the form of a narrow air gap and which is expediently provided between the outer diameter of the threaded shaft of the stud member 74 and the upper part 127 of the nut element 76 which can be regarded as a sleeve portion of the nut. The threaded portion 128 of the female nut member 76 is restricted to a few complete turns of the thread and these thread turns engage threaded stud portion 34 of the grounding stud 74 at a portion intermediate the sleeve portion 127 and the end face 114. The reason for this is to ensure that the force which acts on the female nut member during the piercing and riveting operations, and which is transferred to the nut member via the end face 71, does not lead to extensive contact between the female nut member and the stud. Without the air gap the insertion force which exerts a generally compressive action on the nut element could lead to impermissible clamping effects between the nut and the thread of the stud which would hinder the later release of the nut element necessary for the fitting of the electrical connection lug. Indeed substantial deformation or clamping action could result in destruction of the thread element during removal of the nut.

The gap 126 is in any case dimensioned to be sufficiently small so that it provides a sufficient protection for the threaded portion 34 of the grounding stud 74, and so that excessive quantities of paint or underseal are unlikely to penetrate into the gap 126. In any case the preassembled nut will tend to remove such depositions, if any, on being unscrewed to permit fitment of the electrical connection lug. Thus the nut exerts a type of cleaning action on the thread above it. The actual threads 128 themselves prevent any paint or underseal reaching the electrical contact surface 42 of the flange 38 of the grounding stud 74. Such depositions will not affect the electrical conductivity and could indeed assist the self-locking action of the nut on retightening the same. A slight intentional thread deformation produced during fitting of the grounding assembly would be used to produce the same effect, or to supplement the locking at the collar portion 120.

Finally, it will be noted that the sleeve portion 127 of the female nut member 76 is preferably formed as a hexagonal driving member so that the nut is tightened and released by way of torque applied to this hexagonal portion. The spacing of this portion above the collar portion has the particular advantage that thick electrical cables attached by a lug to the grounding stud do not hinder the application of a driving tool to the hexagonal portion.

It will be understood that various modifications or additions may be made to the preferred embodiments. For example, the relative dimensions of the grounding connectors and associated nuts herein disclosed will depend largely upon the particular application at hand and the selected panel thicknesses. As has been herein described, the grounding connector and grounding connector assembly is particularly suited for attachment to electrically conductive panels such as utilized for body and structural components in the automotive and appliance industries. As will be understood by those skilled in the art, the connector assembly of the present invention is preferably formed of plastically deformable metal, preferably steel, which may be heat treated for surface hardness, ductility, and other desirable features. A suitable material for the fasteners herein disclosed is medium carbon steel suitable for cold forming, including SAE 1022, 1023, and 1030 steels. Excellent results have been achieved with steels in the range of SAE 1020 through SAE 1040.

## Claims

1. An electrical grounding connector assembly (72) for attachment to an electrically conductive panel (48), said electrical grounding connector assembly of the type having a grounding stud connector (74) having a body portion (32) disposed between, and integrally joining, a stud portion (34) and a riveting portion (36), wherein said riveting portion may be a piercing and riveting portion and wherein said body portion includes a flange (38) extending generally radially from said body portion, said flange (38) having a panel engaging surface (40) and a lug engaging surface (42), said electrical grounding connector assembly comprising:
barbed means (44), disposed on at least one of said riveting portion (36) and said panel engaging surface (40) of said flange (38), for conducting electrical current between said electrical grounding connector assembly and said conductive panel when said electrical grounding connector assembly (72) is joined to said electrically conductive panel (48); and
a displaceable cap (76) or a displaceable female nut member (76) adapted to cooperatively engage and substantially cover said stud portion (34) of said grounding stud connector and also adapted to cover said lug enqaqing surface (42) of said flange (38) thereby protecting said stud portion (34) and said lug engaging surface (42) of said flange (38) from contaminants.

2. The electrical grounding connector assembly of claim 1, wherein said riveting portion (36) includes an annular wall defining a socket (52) within said riveting portion, being optionally adapted to pierce said electrically conductive panel (48), and preferably being continuous and adapted to pierce a slug (62) from said electrically conductive panel.

3. The electrical grounding connector assembly of claim 1 or claim 2, wherein said barbed means (44) extends between, and is integral with, said riveting portion (36) and said panel engaging surface (40) of said flange (38).

4. The electrical grounding connector assembly of one of claims 1, 2 or 3, wherein said flange (38) includes an outer surface having a generally cylindrical contour.

5. The electrical grounding connector assembly comprising said cap (76) of any one of claims 1 to 4, wherein said lug engaging surface (42) of said flange (38) includes a portion (82) of said flange (38) proximate said stud portion (34) and wherein said portion (82) of said flange proximate said stud portion (34) is raised relative to a portion (84) of said flange (38) distal said stud portion (34), said portion (84) of said flange (38) distal said stud portion (34) preferably including a plunger engaging surface for engaging a plunger (54) which is adapted to drive said connector assembly into said electrically conductive panel (48).

6. The electrical grounding connector assembly of any one of claims 1 to 3 or 5 when not dependent on claim 4, wherein said flange (38) includes an outer surface having a generally polygonal contour, in particular a generally polygonal contour having depressions (88) superimposed thereon, said depressions in particular being generally arcuate, or said generally polygonal contour has arcuate raised surfaces (94) superimposed thereon.

7. The electrical grounding connector assembly of claim 1, wherein said flange (38) includes an outer surface having a generally hypocycloid outer contour, said hypocycloid outer surface preferably having eight cusps (92).

8. The electrical grounding connector assembly of any one of the preceding claims 1 to 7, wherein said cap (76) or said female nut member (76) is of metal.

9. The electrical grounding connector assembly of claim 8, wherein said metal cap (76) includes a load bearing flange having first and second opposed load bearing surfaces, said first load bearing surface being adapted to engage said lug engaging surface (42) of said flange (38) and said second load bearing surface being adapted to engage a plunger (54), said plunger being adapted to drive said grounding connector assembly into said electrically conductive panel.

10. The electrical grounding connector assembly of claim 8, wherein said metal cap (76) or female nut member (76) includes first and second load bearing, opposing ends, said first load bearing end being adapted to engage said lug engaging surface (42) of said flange (38), and said second load bearing end (71) being adapted to engage a plunger (54), said plunger being adapted to drive said connector assembly into said conductive panel (48).

11. An electrical grounding connector assembly of any one of claims 1 to 10 when assembled to a plastically deformable, electrically conductive panel (48), said panel including an opening intimately surrounding said riveting portion (36) of the male fastener (74) formed by said grounding stud connector, said male fastener (74) being entrapped within said panel opening between a radially deformed lip of said riveting portion and said radially extending flange (38), wherein said barbed means (44) is in continuous electrical contact with said electrically conductive panel (48) thereby forming an electrically conductive path between said electrically conductive panel and said male fastener.

12. The electrical grounding connector assembly of claim 11, wherein said radially deformed lip is deformed outwardly and comprises a generally U-shaped channel which opens generally toward said flange (38) of said male fastener (74).

13. The electrical grounding connector assembly of claim 11, wherein said panel member (48) includes a generally planar portion distal said panel opening and a deformed panel portion proximate said panel opening, said deformed panel portion being displaced from said planar portion, said deformed panel portion thereby engaging said barbed means (44) and providing a path for electric current between said panel member (48) and said male fastener (74).

14. The electrical grounding connector assembly of any one of the preceding claims, wherein said panel engaging surface of said flange includes a plurality of spaced pockets (78).

15. An electrical grounding connector or connector assembly, in accordance with any one of the preceding claims 1-4, 6-8 or 10-14 except when dependent on claims 5 or 9, wherein said female nut member (76) is engaging or is engageable over said stud portion (34), said female nut member having an end face (114) contactable with said lug engaging surface (42), a threaded portion (128) extending over a restricted number of thread turns e.g. typically in the range from 2 to 10 and preferably about 5 thread turns, said threaded portion (128) engaging with corresponding threads of said stud portion (34), and a further sleeve portion (127) extending over at least a part of the still preferably threaded length of said stud portion (34) but spaced therefrom.

16. An electrical grounding connector assembly in accordance with claim 15, characterised in that a portion (122) of said female nut member (76) is deformed, preferably radially deformed, into frictional contact with said stud portion (34), said deformed portion preferably comprising said threaded portion (128) of said female nut member (76).

17. An electrical grounding connector assembly in accordance with either one of claims 15 or 16, wherein said end face (114) of said female nut member (76) and/or said lug engaging surface (42) is slightly conical, said end face of said female nut member and said flange end face contacting one another over an annular line contact (124) preferably over an annular line contact adjacent a radially outer surface of said female nut member (76) and/or of said flange (38).

18. An electrical grounding connector assembly in accordance with any one of the preceding claims 15 to 17, wherein said female nut member (76) has a polygonal driving section (127) and a generally cylindrical collar portion (120).

19. An electrical grounding connector assembly in accordance with claim 18, wherein said collar portion (120) is located at the level of said threaded portion (128).

20. An electrical grounding connector assembly in accordance with claim 18 or claim 19, wherein said collar portion (120) is deformed to grip at said threaded portion (128).

21. An electrical grounding connector assembly in accordance with claim 18, claim 19 or claim 20, wherein said polygonal section (127) is a hexagonal section being coincident at least in part with said sleeve portion (127).

22. A method of attaching an electrical grounding connector assembly (72) to an electrically conductive panel (48), said electrical grounding connector assembly of the type having a grounding stud connector (74) and a displaceable cap (76) or a displaceable female nut member (76), said grounding stud connector having a body portion (32) disposed between and integrally joining, a stud portion (34) and a riveting portion (36), said body portion (32) including a flange (38) extending generally radially from said body portion (32), said flange (38) having a panel engaging surface (40) and a lug engaging surface (42), said electrical grounding connector assembly including barbed elements (44) disposed on at least one of said riveting portion (36) and said panel engaging surface (40) of said flange (38) for conducting electrical current between said electrical grounding connector assembly (72) and said conductive panel (48) when said electrical grounding connector assembly is joined to said electrically conductive panel, said displaceable cap (76) or said displaceable female nut member (76) being adapted to cooperatively engage and substantially cover said stud portion (34) and also adapted to cover said lug engaging surface (42) of said flange (38) thereby protecting said stud portion (34) and said lug engaging surface (42) of said flange (38) from contaminants, said method comprising the steps of:
(a) placing said riveting portion (36) of said electrical grounding connector assembly adjacent said electrically conductive panel;
(b) passing said riveting portion (36) through said panel (48), thereby causing said barbed elements (44) to contact said panel providing a path for electrical current between said electrical grounding connector assembly (72) and said panel (48);
(c) radially deforming said riveting portion (36) of said grounding stud connector, thereby mechanically bonding said electrical grounding connector assembly (72) to said panel (48);
(d) displacing said cap (76) or female nut member (76) from said lug engaging surface (42); and
(e) securing an electrically conducting lug against said lug engaging surface (42) of said flange (38).

23. The method of claim 22, wherein step (b) simultaneously includes using said riveting portion (36) of said grounding stud connector (74) for piercing a slug (62) from said panel.

24. The method of claim 22 or claim 23, wherein step (b) is performed by exerting a force against the flange (38) of the grounding stud connector (74) in the case that said cap is used or by exerting a force against said cap (76) or female nut member (76).

25. The method of claims 22 to 24, wherein step (c) includes deforming said riveting portion (36) of said grounding stud connector (74) into a U-shaped channel, said channel opening generally toward said flange (38) of said grounding stud connector (74) and said panel (48) substantially fills said U-shaped opening in interlocking engagement therewith.

26. The method of any one of claims 22 to 25, wherein step (e) is performed by moving said displaced cap (76) or female nut member (76) towards said lug engaging surface (42) of said flange (38).

## Patentansprüche

1. Elektrische Masseanschlußanordnung (72) zur Anbringung an eine elektrisch leitende Platte (48), wobei die elektrische Masseanschlußanordnung von dem Typ ist, der einen Massebolzenanschluß (74) aufweist, der einen Körperabschnitt (32) aufweist, der zwischen einem Bolzenabschnitt (34) und einem Nietabschnitt (36) angeordnet ist und diese einstückig verbindet, wobei der Nietabschnitt ein Stanz- und Nietabschnitt sein kann, und wobei der Körperabschnitt einen Flansch (38) umfaßt, der sich im allgemeinen radial von dem Körperabschnitt erstreckt, wobei der Flansch (38) eine Platteneingriffsfläche (40) und eine Klemmeneingriffsfläche (42) aufweist, wobei die elektrische Masseanschlußanordnung umfaßt:
ein Verzahnungsmittel (44), das an mindestens einem von dem Nietabschnitt (36) und der Platteneingriffsfläche (40) des Flansches (38) angeordnet ist, um elektrischen Strom zwischen der elektrischen Masseanschlußanordnung und der leitenden Platte zu leiten, wenn die elektrische Masseanschlußanordnung (72) mit der elektrisch leitenden Platte (48) verbunden ist; und
eine versetzbare Kappe (76) oder ein versetzbares Mutternelement (76), die/das derart ausgebildet ist, daß sie/es zusammenwirkend mit dem Bolzenabschnitt (34) der Masseanschlußanordnung in Eingriff steht und diesen im wesentlichen bedeckt, und auch derart ausgebildet ist, daß sie/es die Klemmeneingriffsfläche (42) des Flansches (38) bedeckt, wodurch der Bolzenabschnitt (34) und die Klemmeneingriffsfläche (42) des Flansches (38) vor Verunreinigungen geschützt sind.

2. Elektrische Masseanschlußanordnung nach Anspruch 1, wobei der Nietabschnitt (36) eine ringförmige Wand umfaßt, die eine Ausnehmung (52) innerhalb des Nietabschnitts festlegt, die wahlweise derart ausgebildet ist, daß sie die elektrisch leitende Platte (48) durchstanzt, und vorzugsweise fortlaufend ist und derart ausgebildet ist, daß sie ein Metallstück (62) aus der elektrisch leitenden Platte herausstanzt.

3. Elektrische Masseanschlußanordnung nach Anspruch 1 oder Anspruch 2, wobei das Verzahnungsmittel (44) sich zwischen dem Nietabschnitt (36) und der Platteneingriffsfläche (40) des Flansches (38) erstreckt und einstückig mit diesen ist.

4. Elektrische Masseanschlußanordnung nach einem der Ansprüche 1, 2 oder 3, wobei der Flansch (38) eine Außenfläche mit einer im allgemeinen zylindrischen Kontur aufweist.

5. Elektrische Masseanschlußanordnung, welche die Kappe (76) umfaßt, nach einem der Ansprüche 1 bis 4, wobei die Klemmeneingriffsfläche (42) des Flansches (38) einen Abschnitt (82) des Flansches (38) umfaßt, der nahe bei dem Bolzenabschnitt (34) liegt, und wobei der Abschnitt (82) des Flansches, der nahe bei dem Bolzenabschnitt (34) liegt, relativ zu einem Abschnitt (84) des Flansches (38) erhöht ist, der fern von dem Bolzenabschnitt (34) liegt, wobei der Abschnitt (84) des Flansches (38), der fern von dem Bolzenabschnitt (34) liegt, vorzugsweise eine Stößeleingriffsfläche umfaßt, um mit einem Stößel (54) in Eingriff zu treten, der derart ausgebildet ist, daß er die Anschlußanordnung in die elektrisch leitende Platte (48) hineintreibt.

6. Elektrische Masseanschlußanordnung nach einem der Ansprüche 1 bis 3 oder 5, wenn nicht von Anspruch 4 abhängig, wobei der Flansch (38) eine Außenfläche mit einer im allgemeinen polygonen Kontur, insbesondere einer im allgemeinen polygonen Kontur mit darauf überlagerten Vertiefungen (88) umfaßt, wobei die Vertiefungen insbesondere im allgemeinen gekrümmt sind, oder die im allgemeinen polygone Kontur darauf überlagerte, gekrümmte, erhöhte Flächen (94) aufweist.

7. Elektrische Masseanschlußanordnung nach Anspruch 1, wobei der Flansch (38) eine Außenfläche mit einer im allgemeinen hyperzykloiden Außenkontur aufweist, wobei die hyperzykloide Außenfläche vorzugsweise acht Spitzen (92) aufweist.

8. Elektrische Masseanschlußanordnung nach einem der vorhergehenden Ansprüche 1 bis 7, wobei die Kappe (76) oder das Mutternelement (76) aus Metall besteht.

9. Elektrische Masseanschlußanordnung nach Anspruch 8, wobei die Metallkappe (76) einen lastlagernden Flansch mit einer ersten und einer zweiten entgegengesetzten lastlagernden Oberfläche umfaßt, wobei die erste lastlagernde Oberfläche derart ausgebildet ist, daß sie mit der Klemmeneingriffsfläche (42) des Flansches (38) in Eingriff steht, und die zweite lastlagernde Oberfläche derart ausgebildet ist, daß sie mit einem Stößel (54) in Eingriff steht, wobei der Stößel derart ausgebildet ist, daß er die Masseanschlußanordnung in die elektrisch leitende Platte hineintreibt.

10. Elektrische Masseanschlußanordnung nach Anspruch 8, wobei die Metallkappe (76) oder das Mutternelement (76) ein erstes und ein zweites lastlagerndes entgegengesetztes Ende umfaßt, wobei das erste lastlagernde Ende derart ausgebildet ist, das es mit der Klemmeneingriffsfläche (42) des Flansches (38) in Eingriff steht, und das zweite lastlagernde Ende (71) derart ausgebildet ist, daß es mit einem Stößel (54) in Eingriff steht, wobei der Stößel derart ausgebildet ist, daß er die Anschlußanordnung in die leitende Platte (48) hineintreibt.

11. Elektrische Masseanschlußanordnung nach einem der Ansprüche 1 bis 10, wobei das Bolzenbefestigungselement (74), wenn es an einer plastisch verformbaren, elektrisch leitenden Platte (48) angebaut ist, wobei die Platte eine Öffnung umfaßt, die den Nietabschnitt (36) des Bolzenbefestigungselements (74), der durch den Massebolzenanschluß gebildet ist, eng umgibt, in der Plattenöffnung zwischen einer radial verformten Lippe des Nietabschnitts und dem sich radial erstreckenden Flansch (38) eingeschlossen ist, wobei das Verzahnungsmittel (44) in kontinuierlichem elektrischen Kontakt mit der elektrisch leitenden Platte (48) steht, wodurch ein elektrisch leitender Weg zwischen der elektrisch leitenden Platte und dem Bolzenbefestigungselement gebildet wird.

12. Elektrische Masseanschlußanordnung nach Anspruch 11, wobei die radial verformte Lippe nach außen hin verformt ist und einen im allgemeinen U-förmigen Kanal umfaßt, der sich in Richtung des Flansches (38) des Bolzenbefestigungselements (74) öffnet.

13. Elektrische Masseanschlußanordnung nach Anspruch 11, wobei das Plattenelement (48) einen im allgemeinen ebenen Abschnitt umfaßt, der fern von der Plattenöffnung liegt, und einen verformten Plattenabschnitt umfaßt, der nahe bei der Plattenöffnung liegt, wobei der verformte Plattenabschnitt von dem ebenen Abschnitt versetzt ist, wodurch der verformte Plattenabschnitt mit dem Verzahnungsmittel (44) in Eingriff steht und einen Weg für elektrischen Strom zwischen dem Plattenelement (48) und dem Bolzenbefestigungselement (74) schafft.

14. Elektrische Masseanschlußanordnung nach einem der vorhergehenden Ansprüche, wobei die Platteneingriffsfläche des Flansches mehrere beabstandete Taschen (78) umfaßt.

15. Elektrische Masseanschlußanordnung oder Anschlußanordnung nach einem der vorhergehenden Ansprüche 1-4, 6-8 oder 10-14 außer wenn von den Ansprüchen 5 oder 9 abhängig, wobei das Mutternelement (76) über dem Bolzenabschnitt (34) in Eingriff steht oder in Eingriff stehen kann, wobei das Mutternelement aufweist: eine Endfläche (114), die mit der Klemmeneingriffsfläche (42) kontaktierbar ist, einen Gewindeabschnitt (128), der sich über eine begrenzte Anzahl von Gewindewindungen erstreckt, z.B. typischerweise in dem Bereich von 2 bis 10 und vorzugsweise 5 Gewindewindungen, wobei der Gewindeabschnitt (128) mit entsprechenden Gewinden des Bolzenabschnitts (34) in Eingriff steht, und einen weiteren Hülsenabschnitt (127), der sich über mindestens einen Teil des noch bevorzugt mit einem Gewinde versehenen Länge des Bolzenabschnitts (34) jedoch von diesem beabstandet erstreckt.

16. Elektrische Masseanschlußanordnung nach Anspruch 15, dadurch gekennzeichnet, daß ein Abschnitt (122) des Mutternelements (76) in reibschlüssigem Kontakt mit dem Bolzenabschnitt (34) verformt, vorzugsweise radial verformt ist, wobei der verformte Abschnitt vorzugsweise den Gewindeabschnitt (128) des Mutternelements (76) umfaßt.

17. Elektrische Masseanschlußanordnung nach einem der Ansprüche 15 oder 16, wobei die Endfläche (114) des Mutternelements (76) und/oder die Klemmeneingriffsfläche (42) geringfügig konisch ist, wobei die Endfläche des Mutternelements und die Flanschendfläche einander über einen ringförmigen Linienkontakt (124) vorzugsweise über einen ringförmigen Linienkontakt benachbart zu einer radial äußeren Oberfläche des Mutternelements (76) und/oder des Flansches (38) kontaktieren.

18. Elektrische Masseanschlußanordnung nach einem der vorhergehenden Ansprüche 15 bis 17, wobei das Mutternelement (76) einen polygonen Eintreibabschnitt (127) und einen im allgemeinen zylindrischen Kragenabschnitt (120) umfaßt.

19. Elektrische Masseanschlußanordnung nach Anspruch 18, wobei der Kragenabschnitt (120) sich auf dem Niveau des Gewindeabschnitts (128) befindet.

20. Elektrische Masseanschlußanordnung nach Anspruch 18 oder Anspruch 19, wobei der Kragenabschnitt (120) derart verformt ist, daß er an dem Gewindeabschnitt (128) angreift.

21. Elektrische Masseanschlußanordnung nach Anspruch 18, Anspruch 19 oder Anspruch 20, wobei der polygone Abschnitt (127) ein hexagonaler Abschnitt ist, der mindestens zum Teil mit dem Hülsenabschnitt (127) zusammenfällt.

22. Verfahren zum Anbringen einer elektrischen Masseanschlußanordnung (72) an eine elektrisch leitende Platte (48), wobei die elektrische Masseanschlußanordnung von dem Typ ist, der einen Massebolzenanschluß (74) und eine versetzbare Kappe (76) oder ein versetzbares Mutternelement (76) aufweist, wobei ein Körperabschnitt (32) des Massebolzenanschlusses zwischen einem Bolzenabschnitt (34) und einem Nietabschnitt (36) angeordnet ist und diese einstükkig verbindet, wobei der Körperabschnitt (32) einen Flansch (38) umfaßt, der sich im allgemeinen radial von dem Körperabschnitt (32) erstreckt, wobei der Flansch (38) eine Platteneingriffsfläche (40) und eine Klemmeneingriffsfläche (42) aufweist, wobei die elektrische Masseanschlußanordnung Verzahnungselemente (44) umfaßt, die an mindestens einem von dem Nietabschnitt (36) und der Platteneingriffsfläche (40) des Flansches (38) angeordnet sind, um elektrischen Strom zwischen der elektrischen Masseanschlußanordnung (72) und der leitenden Platte (48) zu leiten, wenn die elektrische Masseanschlußanordnung mit der elektrisch leitenden Platte verbunden ist, wobei die versetzbare Kappe (76) oder das versetzbare Mutternelement (76) derart ausgebildet ist, daß sie/es mit dem Bolzenabschnitt (34) zusammenwirkend in Eingriff steht und diesen im wesentlichen bedeckt, und auch derart ausgebildet ist, daß sie/es die Klemmeneingriffsfläche (42) des Flansches (38) bedeckt, wodurch der Bolzenabschnitt (34) und die Klemmeneingriffsfläche (42) des Flansches (38) vor Verunreinigungen geschützt sind, wobei das Verfahren die Schritte umfaßt, daß:
(a) der Nietabschnitt (36) der elektrischen Masseanschlußanordnung an die elektrisch leitende Platte angrenzend angeordnet wird,
(b) der Nietabschnitt (36) durch die Platte (48) geführt wird, wodurch bewirkt wird, daß die Verzahnungselemente (44) die Platte kontaktieren, wobei sie einen Weg für elektrischen Strom zwischen der elektrischen Masseanschlußanordnung (72) und der Platte (48) schaffen,
(c) der Nietabschnitt (36) des Massebolzenanschlusses radial verformt wird, wodurch die elektrische Masseanschlußanordnung (72) mechanisch mit der Platte (48) verbunden wird,
(d) die Kappe (76) oder das Mutternelement (76) von der Klemmeneingriffsfläche (42) versetzt wird, und
(e) eine elektrisch leitende Klemme an der Klemmeneingriffsfläche (42) des Flansches (38) befestigt wird.

23. Verfahren nach Anspruch 22, wobei Schritt (b) gleichzeitig umfaßt, daß der Nietabschnitt (36) des Massebolzenanschlusses (74) verwendet wird, um ein Metallstück (62) aus der Platte herauszustanzen.

24. Verfahren nach Anspruch 22 oder Anspruch 23, wobei Schritt (b) durchgeführt wird, indem eine Kraft auf den Flansch (38) des Massebolzenanschlusses (74) in dem Fall ausgeübt wird, daß die Kappe verwendet wird, oder indem eine Kraft auf die Kappe (76) oder das Mutternelement (76) ausgeübt wird.

25. Verfahren nach den Ansprüchen 22 bis 24, wobei Schritt (c) umfaßt, daß der Nietabschnitt (36) des Massebolzenanschlusses (74) in einen U-förmigen Kanal hinein verformt wird, wobei sich der Kanal im allgemeinen in Richtung des Flansches (38) des Massebolzenanschlusses (74) öffnet, und die Platte (48) die U-förmige Öffnung in verriegelndem Eingriff mit dieser im wesentlichen füllt.

26. Verfahren nach einem der Ansprüche 22 bis 25, wobei Schritt (e) durchgeführt wird, indem die versetzte Kappe (76) oder das versetzte Mutternelement (76) in Richtung der Klemmeneingriffsfläche (42) des Flansches (38) bewegt wird.

## Revendications

1. Ensemble de raccord de mise à la masse électrique (72) pour fixation à un panneau conducteur d'électricité (48), ledit ensemble de raccord de mise à la masse étant du type comportant un raccord à boulon de mise à la masse (74) comportant une partie formant corps (32) disposée entre, et reliant d'un seul tenant, une partie formant boulon (34) et une partie de rivetage (36), dans lequel ladite partie de rivetage peut être une partie de perçage et de rivetage et dans lequel ladite partie formant corps comprend une collerette (38) s'étendant généralement radialement depuis ladite partie formant corps, ladite collerette (38) comportant une surface d'engagement de panneau (40) et une surface d'engagement d'oreille (42), ledit ensemble de raccord de mise à la masse comprenant :
des moyens de nervures (44), disposés sur au moins ladite partie de rivetage (36) ou ladite surface d'engagement de panneau (40) de ladite collerette (38), pour conduire le courant électrique entre ledit ensemble de raccord de mise à la masse et ledit panneau conducteur lorsque ledit ensemble de raccord de mise à la masse (72) est relié audit panneau conducteur d'électricité (48) ; et
un capuchon amovible (76) ou un élément d'écrou femelle amovible (76) adapté à engager par coopération et recouvrir sensiblement ladite partie formant boulon (34) dudit raccord à boulon de mise à la masse et adapté également à recouvrir ladite surface d'engagement d'oreille (42) de ladite collerette (38) de manière à protéger ladite partie formant boulon (34) et ladite surface d'engagement d'oreille (42) de ladite collerette (38) des produits de contamination.

2. Ensemble de raccord de mise à la masse selon la revendication 1, dans lequel ladite partie de rivetage (36) comprend une paroi annulaire définissant une douille (52) au sein de ladite partie de rivetage, étant éventuellement adaptée, à percer ledit panneau conducteur d'électricité (48), et étant, de préférence, continue et adaptée à percer une chute (62) dudit panneau conducteur d'électricité.

3. Ensemble de raccord de mise à la masse selon la revendication 1 ou la revendication 2, dans lequel lesdits moyens de nervures (44) s'étendent entre, et sont d'un seul tenant avec, ladite partie de rivetage (36) et ladite surface d'engagement de panneau (40) de ladite collerette (38).

4. Ensemble de raccord de mise à la masse selon l'une des revendications 1, 2 ou 3, dans lequel ladite collerette (38) comprend une surface externe ayant un contour généralement cylindrique.

5. Ensemble de raccord de mise à la masse comprenant ledit capuchon (76) selon l'une quelconque des revendications 1 à 4, dans lequel ladite surface d'engagement d'oreille (42) de ladite collerette (38) comprend une partie (82) de ladite collerette (38) proximale de ladite partie formant boulon (34) et dans lequel ladite partie (82) de ladite collerette proximale de ladite partie formant boulon (34) est surélevée par rapport à une partie (84) de ladite collerette (38) distale de ladite partie formant boulon (34) comprenant, de préférence, une surface d'engagement de plongeur pour engager un plongeur (54) qui est adapté à enfoncer ledit ensemble de raccord dans ledit panneau conducteur d'électricité (48).

6. Ensemble de raccord de mise à la masse selon l'une quelconque des revendications 1 à 3 ou 5, lorsque non rattachée à la revendication 4, dans lequel ladite collerette (38) comprend une surface externe ayant un contour généralement polygonal, en particulier un contour généralement polygonal comportant des cavités (88) le recouvrant, lesdites cavités étant en particulier généralement arquées, ou ledit contour généralement polygonal comporte des surfaces surélevées arquées (94) le recouvrant.

7. Ensemble de raccord de mise à la masse selon la revendication 1, dans lequel ladite collerette (38) comprend une surface externe ayant un contour externe généralement hypocycloïdal, ladite surface externe hypocycloïdale comportant, de préférence, huit sommets de rebroussement (92).

8. Ensemble de raccord de mise à la masse selon l'une quelconque des revendications précédentes 1 à 7, dans lequel ledit capuchon (76) ou ledit élément d'écrou femelle (76) est en métal.

9. Ensemble de raccord de mise à la masse selon la revendication 8, dans lequel ledit capuchon de métal (76) comprend une collerette porteuse de charge comportant des première et seconde surfaces porteuses de charge opposées, ladite première surface porteuse de charge étant adaptée à engager ladite surface d'engagement d'oreille (42) de ladite collerette (38) et ladite seconde surface porteuse de charge étant adaptée à engager un plongeur (54), ledit plongeur étant adapté à enfoncer ledit ensemble de raccord de mise à la masse dans ledit panneau conducteur d'électricité.

10. Ensemble de raccord de mise à la masse selon la revendication 8, dans lequel ledit capuchon de métal (76) ou ledit élément d'écrou femelle (76) comprend des première et seconde extrémités opposées porteuses de charge, ladite première extrémité porteuse de charge étant adaptée à engager ladite surface d'engagement d'oreille (42) de ladite collerette (38), et ladite seconde extrémité porteuse de charge (71) étant adaptée à engager un plongeur (54), ledit plongeur étant adapté à enfoncer ledit ensemble de raccord dans ledit panneau conducteur (48).

11. Ensemble de raccord de mise à la masse selon l'une quelconque des revendications 1 à 10, lorsque assemblé à un panneau conducteur d'électricité (48), déformable plastiquement, ledit panneau comprenant une ouverture entourant étroitement ladite partie de rivetage (36) de l'attache mâle (74) formée par ledit raccord à boulon de mise à la masse, ladite attache mâle (74) étant retenue au sein de ladite ouverture de panneau entre un rebord déformé radialement de ladite partie de rivetage et ladite collerette s'étendant radialement (38), dans lequel lesdits moyens de nervures (44) sont en contact électrique continu avec ledit panneau conducteur d'électricité (48) de manière à former une voie conductrice d'électricité entre ledit panneau conducteur d'électricité et ladite attache mâle.

12. Ensemble de raccord de mise à la masse selon la revendication 11, dans lequel ledit rebord déformé radialement est déformé vers l'extérieur et comprend un canal généralement en forme de U qui s'ouvre généralement vers ladite collerette (38) de ladite attache mâle (74).

13. Ensemble de raccord de mise à la masse selon la revendication 11, dans lequel ledit élément de panneau (48) comprend une partie généralement plane distale de ladite ouverture de panneau et une partie de panneau déformée proximale de ladite ouverture de panneau, ladite partie de panneau déformée étant déplacée depuis ladite partie généralement plane, ladite partie de panneau déformée engageant alors lesdits moyens de nervures (44) et formant une voie pour le courant électrique entre ledit élément de panneau (48) et ladite attache mâle (74).

14. Ensemble de raccord de mise à la masse selon l'une quelconque des revendications précédentes, dans lequel ladite surface d'engagement de panneau de ladite collerette comprend une pluralité de poches espacées (78).

15. Raccord ou ensemble de raccord de mise à la masse selon l'une quelconque des revendications précédentes 1 à 4, 6 à 8 ou 10 à 14, excepté lorsque rattachées aux revendications 5 ou 9, dans lequel ledit élément d'écrou femelle (76) engage ou peut être engagé sur ladite partie formant boulon (34), ledit élément d'écrou femelle comportant une face d'extrémité (114) pouvant être mise en contact avec ladite surface d'engagement d'oreille (42), une partie taraudée (128) s'étendant sur un nombre restreint de spires, par exemple comprises généralement entre 2 et 10 et, de préférence, 5 spires, ladite partie taraudée (128) s'engageant avec des filets correspondants de ladite partie formant boulon (34), et également une partie formant manchon (127) s'étendant sur au moins une partie de la longueur encore filetée de préférence de ladite partie formant boulon (34) mais espacée de celle-ci.

16. Ensemble de raccord de mise à la masse selon la revendication 15, caractérisé en ce qu'une partie (122) dudit élément d'écrou femelle (76) est déformée, de préférence déformée radialement, en contact par frottement avec ladite partie formant boulon (34), ladite partie déformée comprenant, de préférence, ladite partie taraudée (128) dudit élément d'écrou femelle (76).

17. Ensemble de raccord de mise à la masse selon l'une quelconque des revendications 15 ou 16, dans lequel ladite face d'extrémité (114) dudit élément d'écrou femelle (76) et/ou de ladite surface d'engagement d'oreille (42) est légèrement conique, ladite face d'extrémité dudit élément d'écrou femelle et ladite face d'extrémité de la collerette se contactant sur une ligne de contact annulaire (124) de préférence sur une ligne de contact annulaire adjacente à une surface externe radialement dudit élément d'écrou femelle (76) et/ou de ladite collerette (38).

18. Ensemble de raccord de mise à la masse selon l'une quelconque des revendications précédentes 15 à 17, dans lequel ledit élément d'écrou femelle (76) comporte une section d'entraînement polygonale (127) et une partie de collier généralement cylindrique (120) .

19. Ensemble de raccord de mise à la masse selon la revendication 18, dans lequel ladite partie de collier (120) est située au niveau de ladite partie taraudée (128).

20. Ensemble de raccord de mise à la masse selon la revendication 18 ou la revendication 19, dans lequel ladite partie de collier (120) est déformée pour un serrage à ladite partie taraudée (128).

21. Ensemble de raccord de mise à la masse selon la revendication 18, la revendication 19 ou la revendication 20, dans lequel ladite section polygonale (127) est une section hexagonale coïncidant au moins en partie avec ladite partie formant manchon (127).

22. Procédé de fixation d'un ensemble de raccord de mise à la masse électrique (72) à un panneau conducteur d'électricité (48), ledit ensemble de raccord de mise à la masse étant du type comportant un raccord à boulon de mise à la masse (74) et un capuchon amovible (76) ou un élément d'écrou femelle amovible (76), ledit raccord à boulon de mise à la masse comportant une partie formant corps (32) disposée entre, et reliant d'un seul tenant, une partie formant boulon (34) et une partie de rivetage (36), ladite partie formant corps (32) comprenant une collerette (38) s'étendant généralement radialement depuis ladite partie formant corps, ladite collerette (38) comportant une surface d'engagement de panneau (40) et une surface d'engagement d'oreille (42), ledit ensemble de raccord de mise à la masse comprenant des éléments de nervures (44) disposés sur au moins ladite partie de rivetage (36) ou ladite surface d'engagement de panneau (40) de ladite collerette (38) pour conduire le courant électrique entre ledit ensemble de raccord de mise à la masse (72) et ledit panneau conducteur (48) lorsque ledit ensemble de raccord de mise à la masse est relié audit panneau conducteur d'électricité, ledit capuchon amovible (76) ou ledit élément d'écrou femelle amovible (76) étant adapté à engager par coopération et recouvrir sensiblement ladite partie formant boulon (34) et adapté également à recouvrir ladite surface d'engagement d'oreille (42) de ladite collerette (38) de manière à protéger ladite partie formant boulon (34) et ladite surface d'engagement d'oreille (42) de ladite collerette (38) des produits de contamination, ledit procédé comprenant les phases consistant à :
(a) placer ladite partie de rivetage (36) dudit ensemble de raccord de mise à la masse adjacente audit panneau conducteur d'électricité ;
(b) faire passer ladite partie de rivetage (36) dans ledit panneau (48) de manière à amener lesdits éléments de nervures (44) à contacter ledit panneau de sorte à former une voie pour le courant électrique entre ledit ensemble de raccord de mise à la masse (72) et ledit panneau (48) ;
(c) déformer radialement ladite partie de rivetage (36) dudit raccord à boulon de mise à la masse, de manière à fixer mécaniquement ledit ensemble de raccord de mise à la masse (72) audit panneau (48) ;
(d) déplacer ledit capuchon (76) ou ledit élément d'écrou femelle (76) depuis ladite surface d'engagement d'oreille (42) ; et
(e) fixer une oreille conductrice d'électricité contre ladite surface d'engagement d'oreille (42) de ladite collerette (38) .

23. Procédé selon la revendication 22, dans lequel la phase (b) comprend simultanément l'utilisation de ladite partie de rivetage (36) dudit raccord à boulon de mise à la masse (74) pour percer une chute (62) dudit panneau.

24. Procédé selon la revendication 22 ou la revendication 23, dans lequel la phase (b) est effectuée en exerçant une force contre la collerette (38) du raccord à boulon de mise à la masse (74) dans le cas où ledit capuchon est employé ou en exerçant une force contre ledit capuchon (76) ou ledit élément d'écrou femelle (76).

25. Procédé selon les revendications 22 à 24, dans lequel la phase (c) comprend la déformation de ladite partie de rivetage (36) dudit raccord à boulon de mise à la masse (74) en un canal en forme de U, ledit canal s'ouvrant généralement vers ladite collerette (38) dudit raccord à boulon de mise à la masse (74) et ledit panneau (48) remplit sensiblement ladite ouverture en forme de U en engagement de verrouillage réciproque.

26. Procédé selon l'une quelconque des revendications 22 à 25, dans lequel la phase (e) est effectuée en déplaçant ledit capuchon amovible (76) ou ledit élément d'écrou femelle amovible (76) vers ladite surface d'engagement d'oreille (42) de ladite collerette (38).
